# EUROPEAN PATENT APPLICATION

(11) **EP 4 606 462 A1**
(43) Date of publication of application: **27.08.2025**
(21) Application number: 23879541.3
(22) Date of filing: 22.09.2023
(51) Int. Cl.: B01D 53/86, B01D 53/94, F01N 3/20

(54) **EXHAUST GAS TREATMENT SYSTEM**

(30) Priority: 21.10.2022 JP 2022169359
(71) Applicant: Kanadevia Corporation, Osaka-shi, Osaka 559-8559 (JP)
(72) Inventor: SHIMIZU, Kana, Osaka-shi, Osaka 559-8559 (JP); NISHI, Tsugumi, Osaka-shi, Osaka 559-8559 (JP); SHONO, Emi, Osaka-shi, Osaka 559-8559 (JP)
(74) Representative: Grünecker Patent- und Rechtsanwälte PartG mbB
(86) International application number: PCT/JP2023/034447
(87) International publication number: WO 2024/084893

(57) **Abstract**

An exhaust gas treatment system 1 includes an exhaust passage 10, a first catalyst device 21, a second catalyst device 31, a third catalyst device 41, a first concentration sensor 22, a second concentration sensor 32, a first bypass passage 23, a second bypass passage 33, a first switching device 24, a second switching device 34, and a control unit 14 that controls the first switching device 24 and the second switching device 34 based on the concentration of each compound detected by the first concentration sensor 22 and the second concentration sensor 32.

## Description

### TECHNICAL FIELD

The present invention relates to an exhaust gas treatment system. More particularly, the present invention relates to an exhaust gas treatment system for treating exhaust gas containing nitrogen oxides (NOₓ), ammonia (NH₃), and nitrous oxide (N₂O).

### BACKGROUND ART

Conventionally, in order to treat exhaust gas, there is a known technique in which a catalyst for treating exhaust gas is disposed in an exhaust passage through which exhaust gas flows to decompose harmful substances in the exhaust gas.

For example, as a method of treating nitrogen oxides and nitrous oxide contained in exhaust gas, there is a technique proposed in which a denitration catalyst, an ammonia decomposition catalyst, and a nitrous oxide decomposition catalyst are disposed in this order to decompose nitrogen oxides and nitrous oxide (see, for example, Patent Document 1).

In the exhaust gas treatment method of Patent Document 1, in the first step, ammonia is added as a reducing agent to reduce nitrogen oxides, and in the second step, the remaining ammonia is decomposed. Thus, the effect of ammonia can be suppressed when the nitrous oxide is decomposed in the third step. In this manner, the nitrogen oxides and nitrous oxide in the exhaust gas can efficiently be decomposed.

### Citation List

### Patent Document

Patent Document 1: Japanese Unexamined Patent Publication No. 2012-192338

### SUMMARY OF THE INVENTION

### PROBLEM TO BE SOLVED BY THE INVENTION

However, in the method of treating the exhaust gas of Patent Document 1, the catalysts used for the exhaust gas treatment are arranged in series, and the exhaust gas always flows through all the catalysts, and thus there is a problem that the performance of the catalysts is remarkably reduced, and the longevity is shortened.

The present invention provides an exhaust gas treatment system capable of decomposing nitrogen oxides and nitrous oxide in the exhaust gas with high efficiency and further suppressing the reduction in the performance of the catalysts.

### MEANS FOR SOLVING THE PROBLEM

The present invention [1] includes an exhaust gas treatment system that treats an exhaust gas containing nitrogen oxides, ammonia, and nitrous oxide, the system including: an exhaust passage through which the exhaust gas flows; a first catalyst device interposed in the exhaust passage and including a first catalyst that reduces nitrogen oxides; a second catalyst device interposed in the exhaust passage and including a second catalyst that decomposes ammonia; a third catalyst device interposed in the exhaust passage and including a third catalyst that decomposes nitrous oxide; a first concentration sensor disposed on an upstream side of the first catalyst device to detect a concentration of nitrogen oxides; a second concentration sensor disposed on an upstream side of the second catalyst device to detect a concentration of ammonia; a first bypass passage bypassing the first catalyst device, the first bypass passage having one end connected to the exhaust passage on the upstream side of the first catalyst device, and the other end connected to the exhaust passage on a downstream side of the first catalyst device; a second bypass passage bypassing the second catalyst device, the second bypass passage having one end connected to the exhaust passage on the upstream side of the second catalyst device, and the other end connected to the exhaust passage on a downstream side of the second catalyst device; a first switching device that switches a passage of the exhaust gas so that the exhaust gas passes through either one of the first catalyst device or the first bypass passage; a second switching device that switches the passage of the exhaust gas so that the exhaust gas passes through either one of the second catalyst device and the second bypass passage; and a control unit that controls the first switching device based on the concentration of nitrogen oxides detected by the first concentration sensor, and controls the second switching device based on the concentration of ammonia detected by the second concentration sensor.

In such an exhaust gas treatment system, the control unit controls the first switching device based on the concentration of nitrogen oxides detected by the first concentration sensor so that the exhaust gas passes through one of the first catalyst device and the first bypass passage, and the control unit controls the second switching device based on the concentration of ammonia detected by the second concentration sensor so that the exhaust gas passes through one of the second catalyst device and the second bypass passage.

As a result, when the concentration of nitrogen oxides in the exhaust gas is low and there is no need to treat the exhaust gas with the first catalyst, the exhaust gas bypasses the first catalyst. Alternatively, when the concentration of ammonia in the exhaust gas is low and there is no need to treat the exhaust gas with the second catalyst, the exhaust gas bypasses the second catalyst. Therefore, the reduction in the performance of these catalysts can be suppressed and the longevity of the catalysts can be extended.

The present invention [2] includes the exhaust gas treatment system described in the above-described [1], wherein the second catalyst device is disposed on the downstream side of the first catalyst device, and the third catalyst device is disposed on the downstream side of the second catalyst device.

In such an exhaust gas treatment system, ammonia is decomposed in the second catalyst device, and then nitrous oxide is decomposed in the third catalyst device.

As a result, when the decomposition of the nitrous oxide is not affected by ammonia, and can be carried out with higher efficiency.

The present invention [3] includes the exhaust gas treatment system described in the above-described [1], wherein the third catalyst device is disposed on the downstream side of the first catalyst device, and the second catalyst device is disposed on a downstream side of the third catalyst device.

In such an exhaust gas treatment system, the nitrogen oxides and the nitrous oxide are decomposed in the first catalyst device and the third catalyst device, respectively, before the ammonia is decomposed in the second catalyst device.

As a result, the ammonia in the exhaust gas can be used as the reducing agent, and the amount of usage of the reducing agent can be further reduced.

The present invention [4] includes the exhaust gas treatment system described in the above-described [1], further including: a third concentration sensor disposed on an upstream side of the third catalyst device to detect a concentration of nitrous oxide; a third bypass passage bypassing the third catalyst device, the third bypass passage having one end connected to the exhaust passage on the upstream side of the third catalyst device, and the other end connected to the exhaust passage on a downstream side of the third catalyst device; and a third switching device that switches the passage of the exhaust gas so that the exhaust gas passes through either one of the third catalyst device or the third bypass passage, wherein the control unit controls the third switching device based on the concentration of nitrous oxide detected by the third concentration sensor.

In such an exhaust gas treatment system, the control unit further controls the third switching device based on the concentration of nitrous oxide detected by the third concentration sensor so that the exhaust gas passes through one of the third catalyst device and the third bypass passage.

As a result, when the concentration of nitrous oxide in the exhaust gas is low and there is no need to treat the exhaust gas with the third catalyst, the exhaust gas bypasses the third catalyst. Therefore, the reduction in performance of the third catalyst, in addition to the first catalyst and the second catalyst, can be suppressed, and the longevity of the catalysts can be extended.

The present invention [5] includes the exhaust gas treatment system described in the above-described [1] or [4], wherein the first catalyst device is disposed on the downstream side of the third catalyst device, and the second catalyst device is disposed on the downstream side of the first catalyst device.

In such an exhaust gas treatment system, the nitrous oxide is decomposed in the third catalyst device before the nitrogen oxides are decomposed in the first catalyst device.

In the third catalyst device, some types of catalysts have a function of decomposing nitrous oxide and nitrogen oxides. Therefore, the concentration of the nitrogen oxides in the exhaust gas becomes low, and the exhaust gas bypasses the first catalyst device, and thus the reduction in the performance of the first catalyst can further be suppressed.

The present invention [6] includes the exhaust gas treatment system described in any one of the above-described [1] to [5], including: a reducing agent supply unit that supplies a reducing agent to the exhaust passage on the upstream of the first catalyst device and/or the upstream side of the third catalyst device.

In such an exhaust gas treatment system, when the nitrogen oxides are reduced, a reducing agent is supplied in accordance with the type of the first catalyst. Further, when the nitrous oxide is decomposed, a reducing agent is supplied in accordance with the type of the third catalyst.

As a result, the nitrogen oxides and nitrous oxide in the exhaust gas are treated in a state where a necessary amount of the reducing agent is contained therein. Therefore, the exhaust gas can be treated with higher efficiency.

The present invention [7] includes the exhaust gas treatment system described in the above-described [6], wherein the reducing agent is ammonia gas, ammonia water, or urea water.

In such an exhaust gas treatment system, the ammonia contained in the exhaust gas can be used as a reducing agent. As a result, when ammonia is contained in the exhaust gas, the supply amount of the reducing agent can be reduced.

The present invention [8] includes the exhaust gas treatment system described in the above-described [6] or [7], including: a reducing agent concentration sensor that detects a concentration of the reducing agent on an upstream side of the reducing agent supply unit.

The present invention [9] includes the exhaust gas treatment system described in the above-described [8], wherein the control unit adjusts a supply amount of the reducing agent that is supplied from the reducing agent supply unit based on the concentration of the reducing agent detected by the reducing agent concentration sensor.

In such an exhaust gas treatment system, when the exhaust gas contains a reducing agent to be supplied, the supply amount of the reducing agent is adjusted by the control unit based on the concentration of the contained reducing agent.

As a result, an appropriate amount of the reducing agent can be supplied, and the amount of usage of the reducing agent can be reduced.

### EFFECTS OF THE INVENTION

The exhaust gas treatment system of the present invention can decompose the nitrogen oxides and nitrous oxide in the exhaust gas with high efficiency, and can suppress the reduction in the performance of the catalyst, and reduce the amount of usage of the reducing agent.

### BRIEF DESCRIPTION OF THE DRAWINGS

FIG. 1 is a schematic block diagram showing an exhaust gas treatment system according to a first embodiment of the present invention.
FIG. 2 is a flowchart for explaining the control of the exhaust gas treatment system shown in FIG. 1.
FIG. 3 is a flowchart for explaining the first treatment shown in FIG. 2.
FIG. 4 is a flowchart for explaining the second treatment shown in FIG. 2.
FIG. 5 is a schematic block diagram showing an exhaust gas treatment system according to a second embodiment of the present invention.
FIG. 6 is a flowchart for explaining the control of the exhaust gas treatment system shown in FIG. 5.
FIG. 7 is a schematic block diagram showing an exhaust gas treatment system according to a third embodiment A of the present invention.
FIG. 8 is a schematic block diagram showing an exhaust gas treatment system according to a third embodiment B of the present invention.
FIG. 9 is a flowchart for explaining the control of the exhaust gas treatment system shown in FIG. 7.
FIG. 10 is a flowchart for explaining the third treatment A shown in FIG. 9.
FIG. 11 is a flowchart for explaining the control of the exhaust gas treatment system shown in FIG. 8.
FIG. 12 is a flowchart for explaining the third treatment B shown in FIG. 11.

### DESCRIPTION OF THE EMBODIMENTS

### (First Embodiment)

### <Configuration of Exhaust Gas Treatment System>

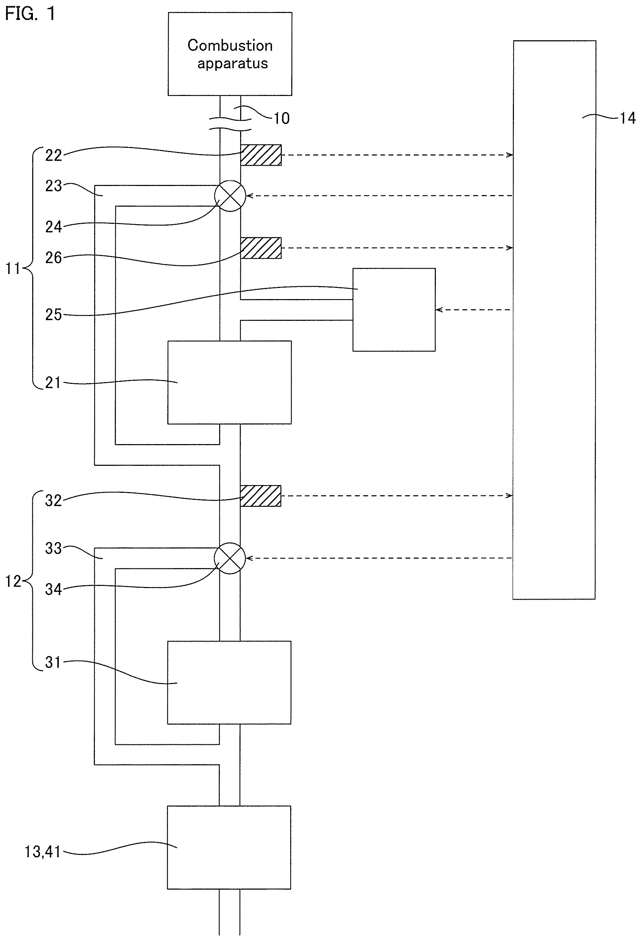

An exhaust gas treatment system 1 as a first embodiment of the present invention is described with reference to FIG. 1.

The exhaust gas treatment system 1 is a system, for example, for treating the exhaust gas discharged from a combustion apparatus.

The exhaust gas is an exhaust gas containing nitrogen oxides, ammonia, and nitrous oxide, and examples thereof include an exhaust gas discharged from a combustion apparatus using an ammonia fuel or a fuel obtained by mixing a fossil fuel with an ammonia fuel, and an exhaust gas discharged from a chemical plant, a power plant, and the like. Examples of such a combustion apparatus include an internal combustion engine such as a land-based engine and a marine engine.

As illustrated in FIG. 1, the exhaust gas treatment system 1 of the first embodiment includes, for example, an exhaust passage 10, a first catalyst unit 11, a second catalyst unit 12, a third catalyst unit 13, and a control unit 14.

In the following description, the upstream side and the downstream side are the upstream side and the downstream side in a flow direction in which the exhaust gas flows.

### [Exhaust Passage]

An upstream-side end portion of the exhaust passage 10 is connected to an exhaust port of the exhaust gas discharged from the combustion apparatus. The exhaust gas discharged from the combustion apparatus flows through the exhaust passage 10. Further, the downstream-side end portion of the exhaust passage 10 is open to the outside air or connected to a known postprocessing apparatus.

In the exhaust gas treatment system 1 of the first embodiment, the first catalyst unit 11, the second catalyst unit 12, and the third catalyst unit 13 are arranged along the exhaust passage 10. Specifically, the second catalyst unit 12 is disposed on the downstream side of the first catalyst unit 11, and the third catalyst unit 13 is disposed on the downstream side of the second catalyst unit 12. That is, the exhaust gas treatment system 1 of the first embodiment includes the first catalyst unit 11, the second catalyst unit 12, and the third catalyst unit 13 in order from the upstream side to the downstream side.

### [First Catalyst Unit]

The first catalyst unit 11 is disposed on the upstream side of the second catalyst unit 12 and the third catalyst unit 13, and includes a first catalyst device 21, a first concentration sensor 22, a first bypass passage 23, a first switching device 24, a first reducing agent supply unit 25, and a first reducing agent concentration sensor 26.

### {First Catalyst Device}

The first catalyst device 21 is interposed in the exhaust passage 10 and disposed on the upstream side of the second catalyst device 31 and the third catalyst device 41. The first catalyst device 21 is a catalyst device having a first catalyst that reduces nitrogen oxides. The exhaust gas passes through the first catalyst device 21, thereby reducing the nitrogen oxides in the exhaust gas.

The first catalyst is not particularly limited as long as it can treat nitrogen oxides. Examples of the first catalyst include, for example, a denitration catalyst that reduces nitrogen oxides with a reducing agent, and includes an active metal. The active metal can also be supported by a catalyst support.

Examples of the active metal include, for example, a transition metal and a poor metal, and preferably a transition metal is used. Examples of the transition metal include, for example, molybdenum, vanadium, tungsten, nickel, cobalt, and iron.

These active metals may be used alone or in combination of two or more.

Examples of the catalyst support include, for example, zeolite, titania, alumina, zirconia, and silica, and preferably titania is used.

These catalyst supports may be used alone or in combination of two or more.

As a method of preparing the denitrification catalyst, it is possible to use an appropriate method of preparing a support containing an active metal, and, for example, an impregnation method, a co-precipitation method, a mixed smelting method, and an alkoxide method are used.

The denitration catalyst may be supported by a substrate. Examples of the substrate include an inorganic fiber sheet. Examples of the inorganic fiber sheet include a glass fiber sheet and a ceramic fiber sheet.

### {First Concentration Sensor}

The first concentration sensor 22 is disposed in the exhaust passage 10 on the upstream side of the first catalyst device 21, and is located at the uppermost of the upstream side in the first catalyst unit 11. The first concentration sensor 22 may be any sensor as long as it detects the concentration of nitrogen oxides in the exhaust gas, and examples thereof include a non-contact gas concentration meter. The first concentration sensor 22 is electrically connected to the control unit 14 to be described later.

### {First Bypass Passage}

The first bypass passage 23 is a passage bypassing the first catalyst device 21, and one end of the first bypass passage 23 is connected to the exhaust passage 10 on the upstream side of the first catalyst device 21, and the other end of the first bypass passage 23 is connected to the exhaust passage 10 on the downstream side of the first catalyst device 21. More specifically, the one end is connected to the exhaust passage 10 between the first concentration sensor 22 and the first catalyst device 21, and the other end is connected to the exhaust passage 10 between the first catalyst device 21 and the second catalyst unit 12. That is, the other end of the first bypass passage 23 is located at the downmost of the downstream side in the first catalyst unit 11.

### {First Switching Device}

The first switching device 24 switches the passage of the exhaust gas so that the exhaust gas flowing through the exhaust passage 10 passes through either one of the first catalyst device 21 or the first bypass passage 23. The first switching device 24 is a three-way valve, and is provided at a branch portion between the exhaust passage 10 and the first bypass passage 23 (i.e., the one end of the first bypass passage 23 that is a portion connected to the exhaust passage 10). The first switching device 24 is electrically connected to the control unit 14 to be described later.

The first switching device 24 is switchable between a first position and a second position. By the switching, one of the exhaust passage 10 and the first bypass passage 23 can be opened while the other is closed.

More specifically, by setting the first switching device 24 to the first position, the exhaust passage 10 is opened and the first bypass passage 23 is closed. In this manner, the exhaust gas can be supplied to the first catalyst device 21.

On the other hand, by setting the first switching device 24 to the second position, the first bypass passage 23 is opened, and the exhaust passage 10 is closed. In this manner, the exhaust gas can be supplied to the first bypass passage 23. In this case, the first catalyst device 21 is allowed to avoid the exhaust gas.

### {First Reducing Agent Supply Unit}

The first reducing agent supply unit 25 as a reducing agent supply unit is connected to the exhaust passage 10 on the upstream side of the first catalyst device 21. More specifically, the first reducing agent supply unit 25 is connected to the exhaust passage 10 between the first catalyst device 21 and the first switching device 24. The first reducing agent supply unit 25 may be configured to supply a reducing agent to the exhaust passage 10, and includes, for example, a tank (not shown) that contains a reducing agent, a metering pump (not shown) for supplying a reducing agent to the exhaust passage 10, and a valve. For example, the first reducing agent supply unit 25 adjusts the flow rate of the metering pump and the opening degree of the valve in accordance with the supply amount to supply the reducing agent to the exhaust passage 10. The first reducing agent supply unit 25 is electrically connected to the control unit 14 to be described later.

Examples of the reducing agent supplied from the first reducing agent supply unit 25 include ammonia gas, ammonia water, and urea water.

### {First Reducing Agent Concentration Sensor}

The first reducing agent concentration sensor 26 as a reducing agent concentration sensor is disposed in the exhaust passage 10 on the upstream side of the first reducing agent supply unit 25. More specifically, the first reducing agent concentration sensor 26 is disposed in the exhaust passage 10 between the first switching device 24 and the first reducing agent supply unit 25. The first reducing agent concentration sensor 26 may be any sensor as long as it detects the concentration of the reducing agent, and examples thereof include a non-contact gas concentration meter. The first reducing agent concentration sensor 26 is electrically connected to the control unit 14 to be described later.

### [Second Catalyst Unit]

The second catalyst unit 12 is disposed on the downstream side of the first catalyst unit 11 and the upstream side of the third catalyst unit 13, and includes a second catalyst device 31, a second concentration sensor 32, a second bypass passage 33, and a second switching device 34.

### {Second Catalyst Device}

The second catalyst device 31 is interposed in the exhaust passage 10, and disposed on the downstream side of the first catalyst device 21 and the upstream side of the third catalyst device 41. The second catalyst device 31 is a catalyst device having a second catalyst that decomposes ammonia. The exhaust gas passes through the second catalyst device 31, thereby decomposing the ammonia in the exhaust gas.

The second catalyst is not particularly limited as long as it is a catalyst capable of decomposing ammonia into nitrogen and water. The second catalyst includes, for example, an ammonia decomposition catalyst, and includes an active metal. The active metal can also be supported by a catalyst support.

Examples of the active metal include, for example, a transition metal and a poor metal, and preferably a transition metal is used. Examples of the transition metal include, for example, molybdenum, vanadium, tungsten, platinum, palladium, rhodium, ruthenium, iridium, manganese, copper, silver, cobalt, iron, and nickel.

These active metals may be used alone or in combination of two or more.

Examples of the catalyst support include, for example, zeolite, titania, alumina, zirconia, and silica, and preferably alumina is used.

These catalyst supports may be used alone or in combination of two or more.

As a method of preparing the ammonia decomposition catalyst, it is possible to use an appropriate method of preparing a support containing an active metal, and, for example, an impregnation method, a co-precipitation method, a mixed smelting method, and an alkoxide method are used.

The ammonia decomposition catalyst may be supported by a substrate. Examples of the substrate include an inorganic fiber sheet. Examples of the inorganic fiber sheet include a glass fiber sheet and a ceramic fiber sheet.

### {Second Concentration Sensor}

The second concentration sensor 32 is disposed in the exhaust passage 10 on the upstream side of the second catalyst device 31, and is located at the uppermost of the upstream side in the second catalyst unit 12. The second concentration sensor 32 may be any sensor as long as it detects the concentration of ammonia in the exhaust gas, and examples thereof include a non-contact gas concentration meter. The second concentration sensor 32 is electrically connected to the control unit 14 to be described later.

### {Second Bypass Passage}

The second bypass passage 33 is a passage bypassing the second catalyst device 31, and one end of the second bypass passage 33 is connected to the exhaust passage 10 on the upstream side of the second catalyst device 31, and the other end of the second bypass passage 33 is connected to the exhaust passage 10 on the downstream side of the second catalyst device 31. More specifically, the one end is connected to the exhaust passage 10 between the second concentration sensor 32 and the second catalyst device 31, and the other end is connected to the exhaust passage 10 between the second catalyst device 31 and the third catalyst unit 13. That is, the other end of the second bypass passage 33 is located at the downmost of the downstream side in the second catalyst unit 12.

### {Second Switching Device}

The second switching device 34 switches the passage of the exhaust gas so that the exhaust gas flowing through the exhaust passage 10 passes through either one of the second catalyst device 31 or the second bypass passage 33. The second switching device 34 is a three-way valve, and is provided at a branch portion between the exhaust passage 10 and the second bypass passage 33 (i.e., the one end of the second bypass passage 33 that is a portion connected to the exhaust passage 10). The second switching device 34 is electrically connected to the control unit 14 to be described later.

The second switching device 34 described above is switchable between the first position and the second position. By the switching, one of the exhaust passage 10 and the second bypass passage 33 can be opened while the other is closed.

More specifically, by setting the second switching device 34 to the first position, the exhaust passage 10 is opened and the second bypass passage 33 is closed. In this manner, the exhaust gas is supplied to the second catalyst device 31.

On the other hand, by setting the second switching device 34 to the second position, the second bypass passage 33 is opened, and the exhaust passage 10 is closed. In this manner, the exhaust gas is supplied to the second bypass passage 33. In this case, the second catalyst device 31 is allowed to avoid the exhaust gas.

### [Third Catalyst Unit]

The third catalyst unit 13 is disposed on the downstream side of the first catalyst unit 11 and the second catalyst unit 12, and includes a third catalyst device 41.

### {Third Catalyst Device}

The third catalyst device 41 is interposed in the exhaust passage 10 and is disposed on the downstream side of the first catalyst device 21 and the second catalyst device 31. The third catalyst device 41 is a catalyst device having a third catalyst that decomposes nitrous oxide. The exhaust gas passes through the third catalyst device 41, thereby decomposing the nitrous oxide in the exhaust gas.

The third catalyst is not particularly limited as long as it can efficiently decompose nitrous oxide. Examples of the third catalyst include, for example, a nitrous oxide decomposition catalyst, and the third catalyst includes an active metal. The active metal can also be supported by a catalyst support.

Examples of the active metal include, for example, a transition metal and a poor metal, and preferably a transition metal is used. Examples of the transition metal include, for example, cobalt, nickel, and iron, and more preferably cobalt and iron are used.

These active metals may be used alone or in combination of two or more.

The nitrous oxide decomposition catalyst may also include a promoter component together with the active metal.

Examples of the promoter component include an alkali metal and an alkaline earth metal, and preferably an alkali metal is used.

Examples of the catalyst support include, for example, zeolite, titania, alumina, zirconia, and silica, and preferably zeolite is used.

These catalyst supports may be used alone or in combination of two or more.

As a method of preparing a nitrogen oxide decomposition catalyst, it is possible to use an appropriate method of preparing a support containing an active metal, and, for example, an impregnation method, a co-precipitation method, a mixed smelting method, and an alkoxide method are used.

Examples of the nitrous oxide decomposition catalyst include a third catalyst A containing iron and zeolite, and a third catalyst B containing cobalt and an alkali metal or an alkaline earth metal.

The third catalyst A requires a reducing agent to decompose nitrous oxide.

The third catalyst B does not require a reducing agent to decompose nitrous oxide.

In the first embodiment, ammonia is decomposed in the second catalyst unit 12. Therefore, the supply of the reducing agent (ammonia) to the third catalyst unit 13 is insufficient. As a result, as the third catalyst, preferably the third catalyst B is used.

Furthermore, in the first embodiment, when the third catalyst unit 13 includes a third reducing agent supply unit 45 (described later) and a third reducing agent concentration sensor 46 (described later), the third catalyst A may be used as the third catalyst.

The nitrous oxide decomposition catalyst may be supported by a substrate. Examples of the substrate include an inorganic fiber sheet. Examples of the inorganic fiber sheet include a glass fiber sheet and a ceramic fiber sheet.

### [Control Unit]

The control unit 14 is a unit that carries out electrical controls in the exhaust gas treatment system 1. The control unit 14 includes a microcomputer including an arithmetic operation processor (CPU), a memory unit, and the like. The control unit 14 controls the exhaust gas treatment system 1 based on the control program stored in the memory unit.

Further, as described above, the control unit 14 is electrically connected to the first concentration sensor 22, the first switching device 24, the first reducing agent concentration sensor 26, the first reducing agent supply unit 25, the second concentration sensor 32, and the second switching device 34.

As described in detail later, the control unit 14 controls the first switching device 24 based on the concentration of nitrogen oxides detected by the first concentration sensor 22, adjusts the supply amount in which the reducing agent is supplied from the first reducing agent supply unit 25 based on the concentration of reducing agent detected by the first reducing agent concentration sensor 26, and controls the second switching device 34 based on the concentration of the ammonia detected by the second concentration sensor 32.

### <Control of Exhaust Gas Treatment System>

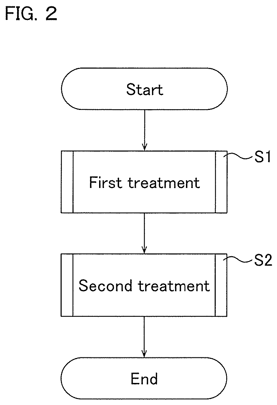

With reference to FIGS. 2 to 4, the control in the exhaust gas treatment system 1 of the first embodiment is described.

As shown in FIG. 2, the control of the exhaust gas treatment system 1 in the first embodiment includes a first treatment (S1) and a second treatment (S2). The control of the exhaust gas treatment system 1 is carried out continuously during the operation of the combustion apparatus. Once this control is started (start), the first treatment (S1) and the second treatment (S2) are sequentially executed, and then the process ends (end).

### [First Treatment]

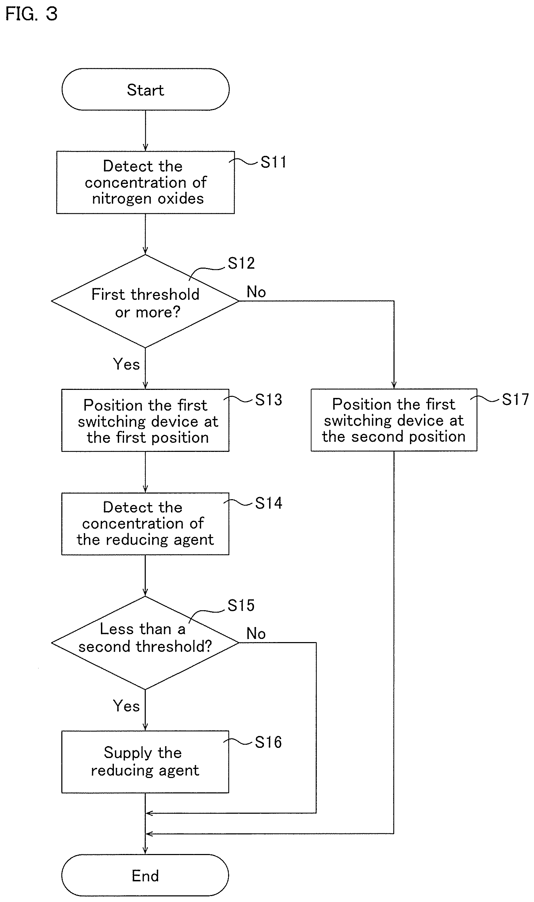

As shown in FIG. 3, in the first treatment (S1), first, the concentration of nitrogen oxides measured by the first concentration sensor 22 is detected (S11), and it is determined whether or not the concentration of nitrogen oxides is a first threshold or more (S12). The first threshold is, for example, 20 ppm.

When the concentration of nitrogen oxides is the first threshold or more (S12: YES), the first switching device 24 is positioned at the first position (S13). Then, the exhaust gas flows through the exhaust passage 10. Next, the concentration of reducing agent measured by the first reducing agent concentration sensor 26 is detected (S14), and it is determined whether or not the concentration of reducing agent with respect to the concentration of nitrogen oxides is less than a second threshold (S15). The second threshold is, for example, 0.8.

When the concentration of reducing agent with respect to the concentration of nitrogen oxides is less than the second threshold (S15: YES), the reducing agent is supplied from the first reducing agent supplying unit 25 (S16). Specifically, the supply amount in which the reducing agent is supplied from the first reducing agent supply unit 25 is adjusted based on the concentration of reducing agent detected by the first reducing agent concentration sensor 26.

Then, the reducing agent is mixed with the exhaust gas flowing through the exhaust passage 10. The mixed exhaust gas passes through the first catalyst device 21. In the first catalyst device 21, the nitrogen oxides are reduced by the first catalyst.

On the other hand, when the concentration of reducing agent with respect to the concentration of nitrogen oxides is not less than the second threshold (S15: NO), the exhaust gas flows through the exhaust passage 10, and is not supplied with the reducing agent from the first reducing agent supply unit 25, and passes through the first catalyst device 21. In the first catalyst device 21, the nitrogen oxides are reduced by the first catalyst.

When the concentration of nitrogen oxides is not equal to or greater than the first threshold (S12: NO), the first switching device 24 is positioned at the second position (S17), and the exhaust gas avoids the first catalyst device 21.

### [Second Treatment]

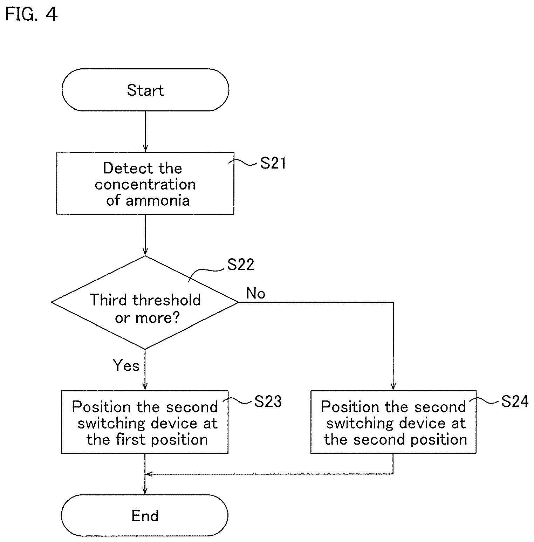

As shown in FIG. 4, in the second treatment (S2), first, the concentration of ammonia measured by the second concentration sensor 32 is detected (S21), and it is determined whether the concentration of ammonia is a third threshold or more (S22). The third threshold is, for example, 10 ppm.

When the concentration of ammonia is the third threshold or more (S22: YES), the second switching device 34 is positioned at the first position (S23). Then, the exhaust gas flows through the exhaust passage 10. Then, the exhaust gas passes through the second catalyst device 31. In the second catalyst device 31, the ammonia is decomposed by the second catalyst.

On the other hand, when the ammonia concentration is not equal to or higher than the third threshold (S22: NO), the second switching device 34 is positioned at the second position (S24), and the exhaust gas avoids the second catalyst device 31.

After the second treatment, the exhaust gas passes through the third catalyst device 41. In the third catalyst device 41, the nitrous oxide is decomposed by the third catalyst.

### <Operations and Effects>

The exhaust gas treatment system 1 of the first embodiment includes the first bypass passage 23 and first switching device 24, and the second bypass passage 33 and second switching device 34. Therefore, when the concentration of nitrogen oxides in the exhaust gas is low and there is no need to treat the exhaust gas with the first catalyst, the exhaust gas bypasses the first catalyst. Alternatively, when the concentration of ammonia in the exhaust gas is low and there is no need to treat the exhaust gas with the second catalyst, the exhaust gas bypasses the second catalyst. By bypassing each catalyst, the reduction in the performance of the catalysts can be suppressed, and the longevity of the catalysts can be extended.

Further, the exhaust gas treatment system 1 of the first embodiment includes the first reducing agent supply unit 25 and the first reducing agent concentration sensor 26. Therefore, when the nitrogen oxides in the exhaust gas is reduced, and a reducing agent to be supplied is already contained in the exhaust gas, the control unit 14 can adjust the supply amount of the reducing agent based on the concentration. As a result, an appropriate amount of the reducing agent can be supplied, and thus the amount of usage of the reducing agent can be reduced, and the nitrogen oxides in the exhaust gas can be treated in a state where the exhaust gas contains an appropriate amount of the reducing agent. Therefore, the treatment can be carried out with higher efficiency.

Furthermore, the exhaust gas treatment system 1 of the first embodiment includes the first catalyst unit 11, the second catalyst unit 12, and the third catalyst unit 13 in order from the upstream side to the downstream side. The ammonia is decomposed in the second catalyst unit 12, and then the nitrous oxide is decomposed in the third catalyst unit 13. Therefore, when the nitrous oxide is decomposed, the decomposition is not affected by the ammonia, and can be carried out with higher efficiency. As the third catalyst, the third catalyst B which does not require a reducing agent is preferably used.

### (Secondary Embodiment)

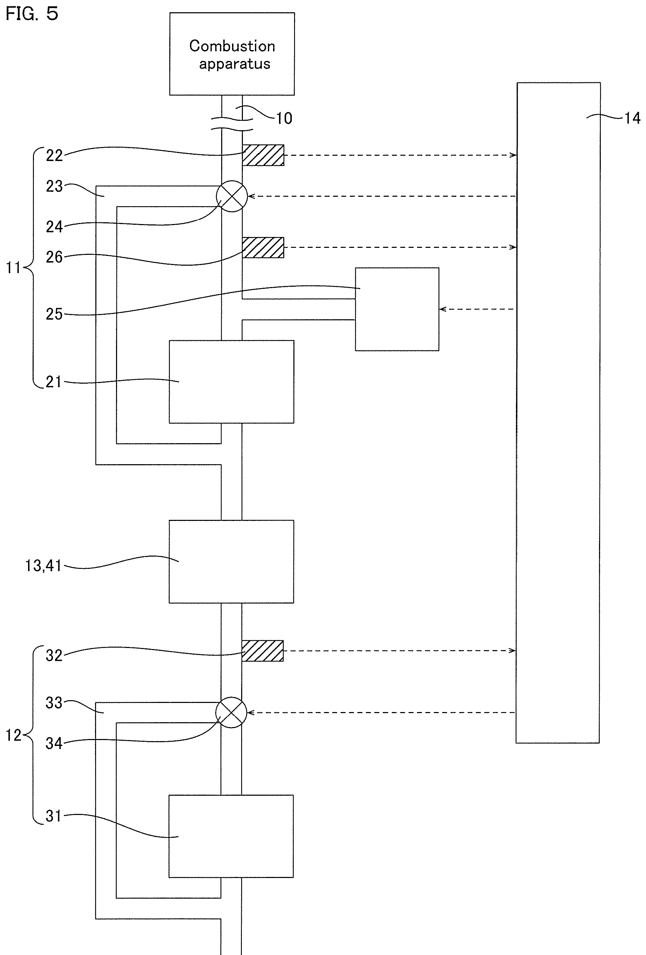

An exhaust gas treatment system 1 as a second embodiment of the present invention is described with reference to FIG. 5. The detailed descriptions of the same configurations as those of the first embodiment are omitted. The second embodiment has the same configurations as the first embodiment except that the second catalyst unit 12 and the third catalyst unit 13 are arranged in the order opposed to that of the first embodiment in the flow direction of the exhaust gas.

In the exhaust gas treatment system 1 of the second embodiment, a first catalyst unit 11, a third catalyst unit 13, and a second catalyst unit 12 are arranged along an exhaust passage 10. Specifically, the third catalyst unit 13 is disposed on the downstream side of the first catalyst unit 11, and the second catalyst unit 12 is disposed on the downstream side of the third catalyst unit 13. That is, the exhaust gas treatment system 1 of the second embodiment includes the first catalyst unit 11, the third catalyst unit 13, and the second catalyst unit 12 in order from the upstream side to the downstream side.

Further, in the exhaust gas treatment system 1 of the second embodiment, the third catalyst device 41 is disposed on the downstream side of the first catalyst device 21, and the second catalyst device 31 is disposed on the downstream side of the third catalyst device 41.

### {Third Catalyst Device}

In the second embodiment, the nitrous oxide is decomposed in the third catalyst unit 13 before the ammonia is decomposed in the second catalyst unit 12. Thus, the suitable catalyst is different depending on the concentration of ammonia in the exhaust gas. When the concentration of ammonia in the exhaust gas is a predetermined threshold or more, for example, the third catalyst A is used as the third catalyst. On the other hand, when the concentration of ammonia in the exhaust gas is less than the predetermined threshold, the third catalyst B is used. The predetermined threshold is, for example, 10 ppm.

When the third catalyst A is used, the third catalyst unit 13 includes a third concentration sensor 42 (described later), a third reducing agent supply unit 45 (described later), and a third reducing agent concentration sensor 46 (described later) to adjust the amount of the reducing agent to be supplied.

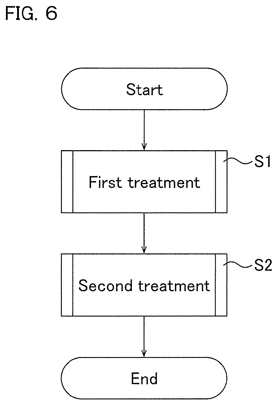

The control in the exhaust gas treatment system 2 of the second embodiment is described with reference to FIG. 6.

As shown in FIG. 6, the control of the exhaust gas treatment system 1 of the second embodiment includes a first treatment (S1) and a second treatment (S2). The control of the exhaust gas treatment system 1 is carried out continuously, for example, during the operation of the combustion apparatus. Once this control is started (start), the first treatment (S1) and the second treatment (S2) are sequentially carried out, and then the process ends (end).

However, after the first treatment (S1) is carried out in the same manner as described above to decompose the nitrogen oxides, the exhaust gas passes through the third catalyst device 41. In the third catalyst device 41, nitrous oxide is decomposed by the third catalyst. Thereafter, the second treatment (S2) is carried out in the same manner as described above, thereby decomposing ammonia.

### <Operations and Effects>

The exhaust gas treatment system 1 of the second embodiment includes a first bypass passage 23 and a first switching device 24, and a second bypass passage 33 and a second switching device 34. Therefore, when the concentration of nitrogen oxides in the exhaust gas is low and there is no need to treat the exhaust gas with the first catalyst, the exhaust gas bypasses the first catalyst. Alternatively, when the concentration of ammonia in the exhaust gas is low and there is no need to treat the exhaust gas with the second catalyst, the exhaust gas bypasses the second catalyst. By bypassing each catalyst, the reduction in the performance of the catalysts can be suppressed, and the longevity of the catalysts can be extended.

The exhaust gas treatment system 1 of the second embodiment includes a first reducing agent supply unit 25 and a first reducing agent concentration sensor 26. Therefore, when the nitrogen oxides in the exhaust gas is reduced, and a reducing agent to be supplied is already contained in the exhaust gas, the control unit 14 can adjust the supply amount of the reducing agent based on the concentration. As a result, an appropriate amount of the reducing agent can be supplied, and thus the amount of usage of the reducing agent can be reduced, and the nitrogen oxides in the exhaust gas can be treated in a state where the exhaust gas contains an appropriate amount of the reducing agent. Therefore, the treatment can be carried out with higher efficiency.

Further, the exhaust gas treatment system 1 of the second embodiment includes the first catalyst unit 11, the third catalyst unit 13, and the second catalyst unit 12 in order from the upstream side to the downstream side. Nitrogen oxides and nitrous oxide are decomposed in the first catalyst unit 11 and the third catalyst unit 13, respectively, before ammonia is decomposed in the second catalyst unit 12. Therefore, the ammonia in the exhaust gas can be used as the reducing agent, and the amount of usage of the reducing agent can be further reduced. As the third catalyst, the third catalyst A or the third catalyst B can be selectively used depending on the amount of the reducing agent (ammonia) contained in the exhaust gas.

### (Third Embodiment)

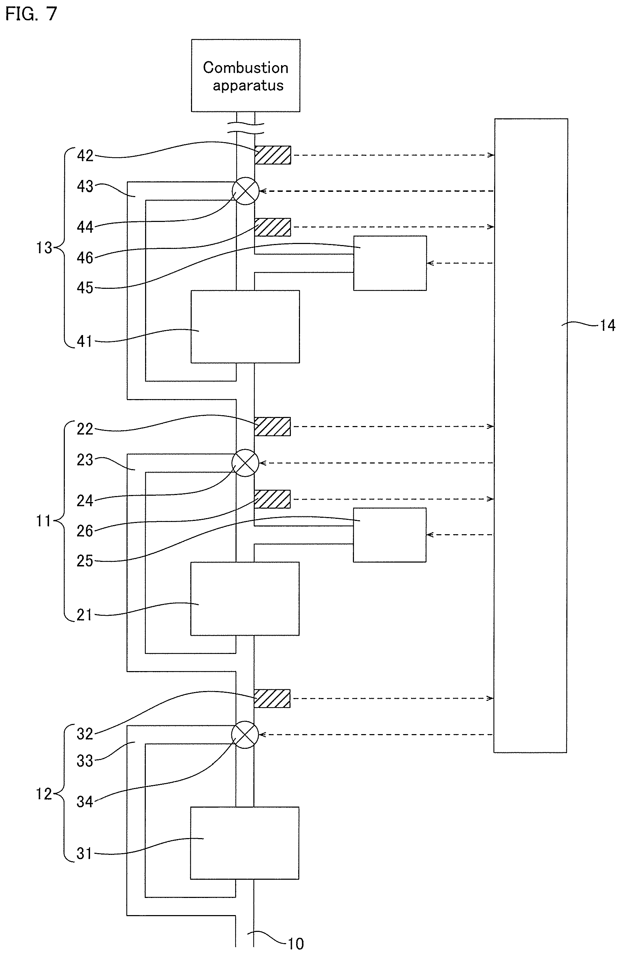

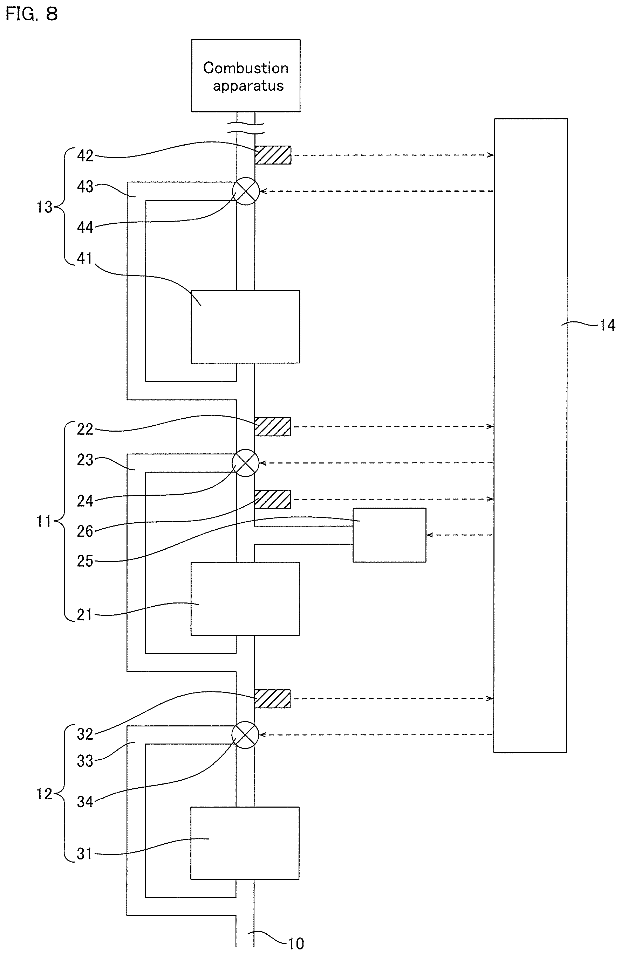

An exhaust gas treatment system 1 of a third embodiment of the present invention is described with reference to FIGS. 7 and 8. The detailed descriptions of the same configurations as those of the first embodiment are omitted. The third embodiment has the same configurations as the first embodiment except that the third catalyst unit 13 is disposed on the uppermost of the upstream side in the flow direction of the exhaust gas, and also the third catalyst unit 13 further includes a third concentration sensor 42, a third bypass passage 43, and a switching device 44.

In the exhaust gas treatment system 1 of the third embodiment, the third catalyst unit 13, the first catalyst unit 11, and the second catalyst unit 12 are arranged along the exhaust passage 10. Specifically, the first catalyst unit 11 is disposed on the downstream side of the third catalyst unit 13, and the second catalyst unit 12 is disposed on the downstream side of the first catalyst unit 11. That is, the exhaust gas treatment system 1 of the third embodiment includes the third catalyst unit 13, the first catalyst unit 11, and the second catalyst unit 12 in order from the upstream side to the downstream side.

In the exhaust gas treatment system 1 of the third embodiment, the first catalyst device 21 is disposed on the downstream side of the third catalyst device 41, and the second catalyst device 31 is disposed on the downstream side of the first catalyst device 21.

In the third embodiment, the nitrous oxide is decomposed in the third catalyst unit 13 before the ammonia is decomposed in the second catalyst unit 12. Thus, the suitable catalyst is different depending on the concentration of ammonia in the exhaust gas. When the concentration of ammonia in the exhaust gas is a predetermined threshold or more, for example, the third catalyst A is used as the third catalyst. On the other hand, when the concentration of ammonia in the exhaust gas is less than the predetermined threshold, the third catalyst B is used. The predetermined threshold is, for example, 10 ppm.

### (Third Embodiment A)

A case where the third catalyst A is used as the third catalyst is described with reference to FIG. 7.

### [Third Catalyst Unit]

In the third embodiment A, the third catalyst unit 13 is disposed on the upstream side of the first catalyst unit 11 and the second catalyst unit 12, and includes a third catalyst device 41, a third concentration sensor 42, a third bypass passage 43, a third switching device 44, a third reducing agent supply unit 45, and a third reducing agent concentration sensor 46.

### {Third Catalyst Device}

In the third embodiment A, the third catalyst A is used as the third catalyst.

### {Third Concentration Sensor}

The third concentration sensor 42 is disposed in the exhaust passage 10 on the upstream side of the third catalyst device 41, and is located on the uppermost of the upstream side in the third catalyst unit 13. The third concentration sensor 42 may be any sensor as long as it detects the concentration of nitrous oxide in the exhaust gas, and examples thereof include a non-contact gas concentration meter. The third concentration sensor 42 is electrically connected to the control unit 14.

### {Third Bypass Passage}

The third bypass passage 43 is a passage bypassing the third catalyst device 41, and one end of the third bypass passage 43 is connected to the exhaust passage 10 on the upstream side of the third catalyst device 41, and the other end of the third bypass passage 43 is connected to the exhaust passage 10 on the downstream side of the third catalyst device 41. More specifically, the one end is connected to the exhaust passage 10 between the third concentration sensor 42 and the third catalyst device 41, and the other end is connected to the exhaust passage 10 between the third catalyst device 41 and the first catalyst unit 11. That is, the other end of the third bypass passage 43 is located on the downmost of the downstream side in the third catalyst unit 13.

### {Third Switching Device}

The third switching device 44 switches the passage of the exhaust gas so that the exhaust gas flowing through the exhaust passage 10 passes through either one of the third catalyst device 41 or the third bypass passage 43. The third switching device 44 is a three-way valve, and is provided at a branch portion between the exhaust passage 10 and the third bypass passage 43 (i.e., one end of the third bypass passage 43 that is a portion connected to the exhaust passage 10). The third switching device 44 is electrically connected to the control unit 14.

The third switching device 44 is switchable between the first position and the second position. By the switching, one of the exhaust passage 10 and the third bypass passage 43 can be opened while the other is closed.

More specifically, by setting the third switching device 44 to the first position, the exhaust passage 10 is opened and the third bypass passage 43 is closed. In this manner, the exhaust gas can be supplied to the third catalyst device 41.

On the other hand, by setting the third switching device 44 to the second position, the third bypass passage 43 is opened and the exhaust passage 10 is closed. In this manner, the exhaust gas can be supplied to the third bypass passage 43. In this case, the third catalyst device 41 is allowed to avoid the exhaust gas.

### {Third Reducing Agent Supply Unit}

The third reducing agent supply unit 45 as a reducing agent supply unit is connected to the exhaust passage 10 on the upstream side of the third catalyst device 41. More specifically, the third reducing agent supply unit 45 is connected to the exhaust passage 10 between the third catalyst device 41 and the third switching device 44. The third reducing agent supply unit 45 may be configured to supply a reducing agent to the exhaust passage 10, and includes, for example, a tank (not shown) containing a reducing agent, a metering pump (not shown) for supplying the reducing agent to the exhaust passage 10, and a valve. For example, the third reducing agent supply unit 45 adjusts the flow rate of the metering pump and the opening degree of the valve in accordance with the supply amount in which the reducing agent is supplied to the exhaust passage 10. The third reducing agent supply unit 45 is electrically connected to the control unit 14.

Examples of the reducing agent supplied from the third reducing agent supply unit 45 include ammonia gas, ammonia water, and urea water.

### {Third Reducing Agent Concentration Sensor}

The third reducing agent concentration sensor 46 as a reducing agent concentration sensor is disposed in the exhaust passage 10 on the upstream side of the third reducing agent supply unit 45. More specifically, the third reducing agent concentration sensor 46 is disposed in the exhaust passage 10 between the third switching device 44 and the third reducing agent supply unit 45. The third reducing agent concentration sensor 46 may be any sensor as long as it detects the concentration of reducing agent, and examples thereof include a non-contact gas concentration meter. The third reducing agent concentration sensor 46 is electrically connected to the control unit 14.

### [Control Unit]

As described above, the control unit 14 is electrically connected to the first concentration sensor 22, the first switching device 24, the first reducing agent supply unit 25, the first reducing agent concentration sensor 26, the second concentration sensor 32, the second switching device 34, the third concentration sensor 42, the third switching device 44, the third reducing agent supply unit 45, and the third reducing agent concentration sensor 46.

As described in detail later, the control unit 14 controls the first switching device 24 based on the concentration of nitrogen oxides detected by the first concentration sensor 22, adjusts the supply amount in which the reducing agent is supplied from the first reducing agent supply unit 25 based on the concentration of reducing agent detected by the first reducing agent concentration sensor 26, controls the second switching device 34 based on the concentration of ammonia detected by the second concentration sensor 32, controls the third switching device 44 based on the concentration of nitrous oxide detected by the third concentration sensor 42, and adjusts the supply amount in which the reducing agent is supplied from the third reducing agent supply unit 45 based on the concentration of reducing agent detected by the third reducing agent concentration sensor 46.

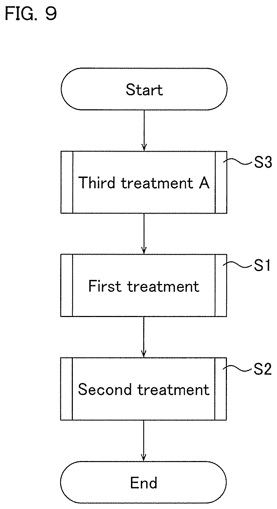

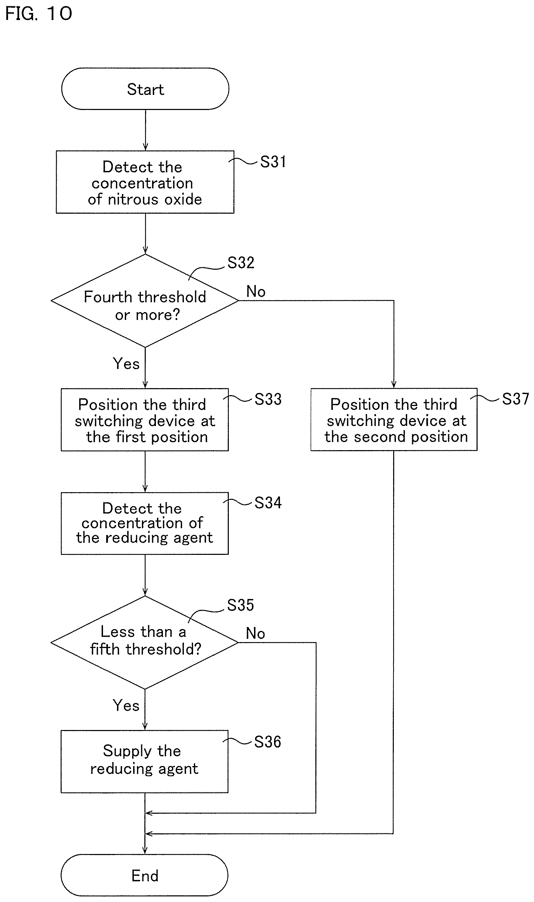

With reference to FIGS. 9 and 10, the control of the exhaust gas treatment system 1 of the third embodiment A is described.

As illustrated in FIG. 9, the control of the exhaust gas treatment system 1 of the third embodiment A includes a third treatment A (S3), a first treatment (S1), and a second treatment (S2). The control of the exhaust gas treatment system 1 is carried out continuously during the operation of the combustion apparatus. Once this control is started (start), the third treatment A (S3), the first treatment (S1), and the second treatment (S2) are sequentially carried out, and then the process ends (end).

### [Third Treatment A]

As illustrated in FIG. 10, in the third treatment A (S3), first, the concentration of nitrous oxide measured by the third concentration sensor 42 is detected (S31), and it is determined whether or not the concentration of nitrous oxide is a fourth threshold or more (S32). The fourth threshold is, for example, 10 ppm.

When the concentration of nitrous oxide is the fourth threshold or more (S32: YES), the third switching device 44 is positioned at the first position (S33). Then, the exhaust gas flows through the exhaust passage 10. Next, the concentration of reducing agent measured by the third reducing agent concentration sensor 46 is detected (S34), and it is determined whether or not the concentration of reducing agent with respect to the concentration of nitrous oxide is less than a fifth threshold (S35). The fifth threshold is, for example, 2.5.

When the concentration of reducing agent with respect to the concentration of nitrous oxide is less than the fifth threshold (S35: YES), the reducing agent is supplied from the third reducing agent supply unit 45 (S36). Specifically, the supply amount in which the reducing agent is supplied from the third reducing agent supply unit 45 is adjusted based on the concentration of reducing agent detected by the third reducing agent concentration sensor 46.

Then, the reducing agent is mixed with the exhaust gas flowing through the exhaust passage 10. The mixed exhaust gas passes through the third catalyst device 41. In the third catalyst device 41, nitrous oxide is decomposed by the third catalyst.

On the other hand, when the concentration of reducing agent with respect to the concentration of nitrous oxide is not less than the fifth threshold (S35: NO), the exhaust gas is not supplied with the reducing agent from the third reducing agent supplying unit 45, and passes through the third catalyst device 41. In the third catalyst device 41, nitrous oxide is decomposed by the third catalyst.

When the concentration of nitrous oxide is not equal to or greater than the fourth threshold (S32: NO), the third switching device 44 is positioned at the second position (S37), and the exhaust gas avoids the third catalyst device 41.

Thereafter, the first treatment (S1) is carried out to decompose the nitrous oxide, and the second treatment (S2) is carried out to decompose ammonia in the same manner as described above.

### (Third Embodiment B)

A case where the third catalyst B is used as the third catalyst is described with reference to FIG. 8.

### [Third Catalyst Unit]

In the third embodiment B, the third catalyst unit 13 is disposed on the upstream side of the first catalyst unit 11 and the second catalyst unit 12, and includes a third catalyst device 41, a third concentration sensor 42, a third bypass passage 43, and a third switching device 44.

### {Third Catalyst Device}

In the third embodiment B, the third catalyst B is used as the third catalyst.

### [Control Unit]

As described above, the control unit 14 is electrically connected to the first concentration sensor 22, the first switching device 24, the first reducing agent supply unit 25, the first reducing agent concentration sensor 26, the second concentration sensor 32, the second switching device 34, the third concentration sensor 42, and the third switching device 44.

As described in detail later, the control unit 14 controls the first switching device 24 based on the concentration of nitrogen oxides detected by the first concentration sensor 22, adjusts the supply amount in which the reducing agent is supplied from the first reducing agent supply unit 25 based on the concentration of reducing agent detected by the first reducing agent concentration sensor 26, controls the second switching device 34 based on the concentration of ammonia detected by the second concentration sensor 32, and controls the third switching device 44 based on the concentration of nitrous oxide detected by the third concentration sensor 42.

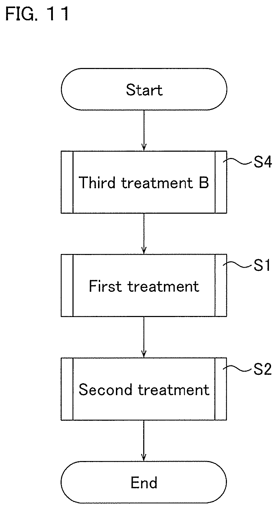

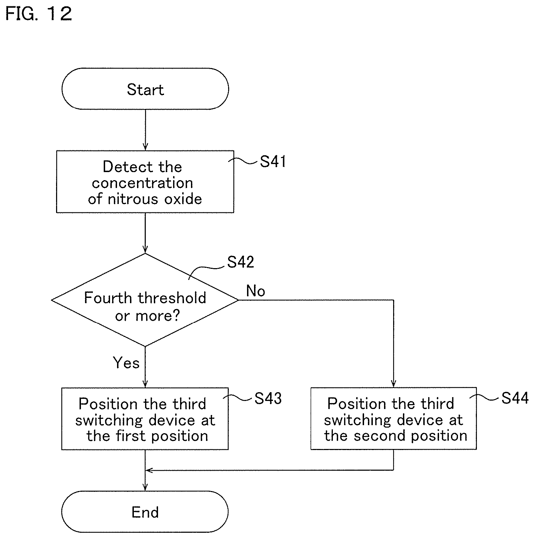

With reference to FIGS. 11 and 12, the control in the exhaust gas treatment system 1 of the third embodiment B is described.

As illustrated in FIG. 11, the control of the exhaust gas treatment system 1 in the third embodiment B includes a third treatment B (S4), a first treatment (S1), and a second treatment (S3). The control of the exhaust gas treatment system 1 is carried out continuously during the operation of the combustion apparatus. Once this control is started (start), the third treatment B (S4), the first treatment (S1), and the second treatment (S2) are sequentially carried out, and then the process ends (end).

### [Third Treatment B]

As shown in FIG. 12, in the third treatment B (S4), first, the concentration of nitrous oxide measured by the third concentration sensor 42 is detected (S41), and it is determined whether or not the concentration of nitrous oxide is the fourth threshold or more (S42). The fourth threshold is, for example, 10 ppm.

When the concentration of nitrous oxide is the fourth threshold or more (S42: YES), the third switching device 44 is positioned at the first position (S43). Then, the exhaust gas flows through the exhaust passage 10. Next, the exhaust gas passes through the third catalyst device 41. In the third catalyst device 41, nitrous oxide is decomposed by the third catalyst.

On the other hand, when the concentration of nitrous oxide is not equal to or greater than the fourth threshold (S42: NO), the third switching device 44 is positioned at the second position (S44), and the exhaust gas avoids the third catalyst device 41.

Thereafter, the first treatment (S1) is carried out to decompose the nitrous oxide, and the second process (S2) is carried out to decompose the ammonia in the same manner as described above.

### <Operations and Effects>

The exhaust gas treatment system 1 of the third embodiment includes a first bypass passage 23 and a first switching device 24, a second bypass passage 33 and a second switching device 34, and a third bypass passage 43 and a third switching device 44. Therefore, when the concentration of nitrogen oxides in the exhaust gas is low and there is no need to treat the exhaust gas with the first catalyst, the exhaust gas bypasses the first catalyst. Alternatively, when the concentration of ammonia in the exhaust gas is low and there is no need to treat the exhaust gas with the second catalyst, the exhaust gas bypasses the second catalyst. When the concentration of nitrous oxide in the exhaust gas is low, and there is no need to treat the exhaust gas with the third catalyst, the exhaust gas bypasses the third catalyst. By bypassing each catalyst, the reduction in the performance of the catalysts can be suppressed, and the longevity of the catalysts can be extended.

Further, the exhaust gas treatment system 1 of the third embodiment includes the first reducing agent supply unit 25 and the first reducing agent concentration sensor 26. Therefore, when the nitrogen oxides in the exhaust gas is reduced, and a reducing agent to be supplied is already contained in the exhaust gas, the control unit can adjust the supply amount of the reducing agent based on the concentration. As a result, an appropriate amount of the reducing agent can be supplied, and thus the amount of usage of the reducing agent can be reduced, and the nitrogen oxides in the exhaust gas can be treated in a state where the exhaust gas contains an appropriate amount of the reducing agent. Therefore, the treatment can be carried out with higher efficiency.

The exhaust gas treatment system 1 of the third embodiment A further includes a third reducing agent supply unit 45 and a third reducing agent concentration sensor 46. Therefore, when the nitrous oxide in the exhaust gas is reduced, and a reducing agent to be supplied is already contained in the exhaust gas, the control unit can adjust the supply amount of the reducing agent based on the concentration. As a result, an appropriate amount of the reducing agent can be supplied, and thus the amount of usage of the reducing agent can be reduced, and the nitrous oxide in the exhaust gas can be treated in a state where the exhaust gas contains an appropriate amount of the reducing agent. Therefore, the treatment can be carried out with higher efficiency.

Further, the exhaust gas treatment system 1 of the third embodiment includes the third catalyst unit 13, the first catalyst unit 11, and the second catalyst unit 12 in order from the upstream side to the downstream side. Nitrogen oxides and nitrous oxide are decomposed in the first catalyst unit 11 and the third catalyst unit 13, respectively, before the ammonia is decomposed in the second catalyst unit 12. Therefore, the ammonia in the exhaust gas can be used as the reducing agent, and the amount of usage of the reducing agent can further be reduced. As the third catalyst, the third catalyst A or the third catalyst B can be selectively used depending on the amount of the reducing agent (ammonia) in the exhaust gas.

In the exhaust gas treatment system 1 of the third embodiment A, the nitrous oxide is decomposed in the third catalyst unit 13 before the nitrogen oxides are decomposed in the first catalyst unit 11. As the third catalyst A, some catalysts (for example, a catalyst using zeolite as a support) have a function of decomposing nitrous oxide and nitrogen oxides. Therefore, the concentration of nitrogen oxides in the exhaust gas is lowered, and the exhaust gas bypasses the first catalyst, thereby further suppressing the reduction in the performance of the first catalyst.

### (Modified Example 1)

In the exhaust gas treatment system 1 as the first embodiment described above, the third catalyst unit includes only the third catalyst device 41, but may further include a third concentration sensor 42, a third bypass passage 43, a third switching device 44, a third reducing agent supply unit 45, and a third reducing agent concentration sensor 46. The detailed descriptions of the same configurations as those of the third embodiment are omitted.

### (Modified Example 2)

In the exhaust gas treatment system 1 as the second embodiment described above, the third catalyst unit includes only the third catalyst device 41, but may further include a third concentration sensor 42, a third bypass passage 43, a third switching device 44, a third reducing agent supply unit 45, and a third reducing agent concentration sensor 46. The detailed descriptions of the same configurations as those of the third embodiment are omitted.

The configurations of the above-described embodiments and modified examples may be appropriately combined as long as they do not conflict with each other. In particular, the first catalyst unit, the second catalyst unit, and the third catalyst unit may be installed in any order.

While the illustrative embodiments of the present invention are provided in the above-described description, such is for illustrative purpose only and it is not to be construed as limiting in any manner. Modification and variation of the present invention that will be obvious to those skilled in the art is to be covered by the following claims.

### Industrial Applicability

The exhaust gas treatment system of the present invention is preferably used for decomposing the harmful substances contained in an exhaust gas discharged from a combustion apparatus (an internal combustion engine such as a land-based engine and a marine engine) using an ammonia fuel or a fuel obtained by mixing a fossil fuel with an ammonia fuel, and an exhaust gas discharged from a chemical plant, a power plant, and the like.

### Description of Reference Numerals

1 Exhaust gas treatment system
10 Exhaust passage
11 First catalyst unit
12 Second catalyst unit
13 Third catalyst unit
14 Control unit
21 First catalyst device
22 First concentration sensor
23 First bypass passage
24 First switching device
25 First reducing agent supply unit
26 First reducing agent concentration sensor
31 Second catalyst device
32 Second concentration sensor
33 Second bypass passage
34 Second switching device
41 Third catalyst device
42 Third concentration sensor
43 Third bypass passage
44 Third switching device
45 Third reducing agent supply unit
46 Third reducing agent concentration sensor

## Claims

1. An exhaust gas treatment system that treats an exhaust gas containing nitrogen oxides, ammonia, and nitrous oxide, the system comprising:
an exhaust passage through which the exhaust gas flows;
a first catalyst device interposed in the exhaust passage and including a first catalyst that reduces nitrogen oxides;
a second catalyst device interposed in the exhaust passage and including a second catalyst that decomposes ammonia;
a third catalyst device interposed in the exhaust passage and including a third catalyst that decomposes nitrous oxide;
a first concentration sensor disposed on an upstream side of the first catalyst device to detect a concentration of nitrogen oxides;
a second concentration sensor disposed on an upstream side of the second catalyst device to detect a concentration of ammonia;
a first bypass passage bypassing the first catalyst device, the first bypass passage having one end connected to the exhaust passage on the upstream side of the first catalyst device, and the other end connected to the exhaust passage on a downstream side of the first catalyst device;
a second bypass passage bypassing the second catalyst device, the second bypass passage having one end connected to the exhaust passage on the upstream side of the second catalyst device, and the other end connected to the exhaust passage on a downstream side of the second catalyst device;
a first switching device that switches a passage of the exhaust gas so that the exhaust gas passes through either one of the first catalyst device or the first bypass passage;
a second switching device that switches the passage of the exhaust gas so that the exhaust gas passes through either one of the second catalyst device and the second bypass passage; and
a control unit that controls the first switching device based on the concentration of nitrogen oxides detected by the first concentration sensor, and controls the second switching device based on the concentration of ammonia detected by the second concentration sensor.

2. The exhaust gas treatment system according to claim 1, wherein the second catalyst device is disposed on the downstream side of the first catalyst device, and the third catalyst device is disposed on the downstream side of the second catalyst device.

3. The exhaust gas treatment system according to claim 1, wherein the third catalyst device is disposed on the downstream side of the first catalyst device, and the second catalyst device is disposed on a downstream side of the third catalyst device.

4. The exhaust gas treatment system according to claim 1, further comprising:
a third concentration sensor disposed on an upstream side of the third catalyst device to detect a concentration of nitrous oxide;
a third bypass passage bypassing the third catalyst device, the third bypass passage having one end connected to the exhaust passage on the upstream side of the third catalyst device, and the other end connected to the exhaust passage on a downstream side of the third catalyst device; and
a third switching device that switches the passage of the exhaust gas so that the exhaust gas passes through either one of the third catalyst device or the third bypass passage,
wherein the control unit controls the third switching device based on the concentration of nitrous oxide detected by the third concentration sensor.

5. The exhaust gas treatment system according to claim 4, wherein the first catalyst device is disposed on the downstream side of the third catalyst device, and the second catalyst device is disposed on the downstream side of the first catalyst device.

6. The exhaust gas treatment system according to any one of claims 1 to 5, comprising:
a reducing agent supply unit that supplies a reducing agent to the exhaust passage on the upstream of the first catalyst device and/or the upstream side of the third catalyst device.

7. The exhaust gas treatment system according to claim 6, wherein the reducing agent is ammonia gas, ammonia water, or urea water.

8. The exhaust gas treatment system according to claim 6, comprising:
a reducing agent concentration sensor that detects a concentration of the reducing agent on an upstream side of the reducing agent supply unit.

9. The exhaust gas treatment system according to claim 8, wherein the control unit adjusts a supply amount of the reducing agent that is supplied from the reducing agent supply unit based on the concentration of the reducing agent detected by the reducing agent concentration sensor.
